Europäisches Patentamt

European Patent Office

Office européen des brevets

(19)

(11) **EP 1 338 324 A2**

(12) # DEMANDE DE BREVET EUROPEEN

(43) Date de publication:
   **27.08.2003 Bulletin 2003/35**

(51) Int Cl.⁷: **B01D 53/04**

(21) Numéro de dépôt: **03300001.9**

(22) Date de dépôt: **20.01.2003**

(84) Etats contractants désignés:
   **AT BE BG CH CY CZ DE DK EE ES FI FR GB GR
   HU IE IT LI LU MC NL PT SE SI SK TR**
   Etats d'extension désignés:
   **AL LT LV MK RO**

(30) Priorité: **07.02.2002 FR 0201506**

(71) Demandeur: **L'Air Liquide S. A. à Directoire et
   Conseil de Surveillance pour l'Etude et
   l'Exploitation des Procédés Georges Claude
   75321 Paris Cedex 07 (FR)**

(72) Inventeurs:
   • **Moreau, Serge
     75140 Vélizy (FR)**
   • **Guéret, Vincent
     78114 Magny Les Hameaux (FR)**

(74) Mandataire: **Ducreux, Marie
   L'Air Liquide S.A.,
   Direction de la Propriété Intellectuelle,
   75 Quai d'Orsay
   75321 Paris Cedex 07 (FR)**

(54) **Utilisation d'un adsorbant sous forme de mousse solide pour la purification ou la séparation de gaz**

(57) Procédé de purification ou de séparation d'un gaz ou mélange gazeux utilisant un adsorbant monolithique pour la séparation ou la purification de gaz ou mélanges gazeux ayant une structure alvéolaire à porosité ouverte se présentant sous la forme d'une mousse solide perméable aux molécules de gaz. La phase gazeuse de l'adsorbant possède une structure essentiellement convexe et la phase solide une structure essentiellement concave. La mousse solide présente une densité supérieure ou égale à 500 kg/m³ et une porosité ouverte comprise entre 20 et 60%. Le gaz est de l'air ou un mélange $H_2/CO$. Le procédé est de type VSA, PSA ou TSA. Ce procédé est utilisable notamment dans des systèmes de type OBOGS pour alimenter des passagers du véhicule ou un dispositif participant à la traction du véhicule et/ou à son alimentation électrique, en particulier une pile à combustible. Ce procédé est utilisable également dans les concentrateurs d'oxygène médical.

**Description**

La présente invention concerne un procédé de purification ou de séparation de gaz ou mélanges gazeux utilisant un adsorbant monolithique ayant une structure alvéolaire à porosité ouverte se présentant sous la forme d'une mousse solide perméable aux molécules de gaz.

Actuellement, les adsorbants industriels sont utilisés sous forme de lit granulaire. Dans cette configuration, le lit d'adsorbant se présente comme un empilement en vrac de particules de forme quelconque : billes, extrudés, formes plus complexes.

Cette disposition peut être définie comme constituée d'une phase solide localement essentiellement convexe coexistant avec une phase gaz essentiellement concave occupant l'espace laissé libre par le solide.

Une voie en développement consiste à faire des adsorbants dits monolithes en nids d'abeilles, essentiellement constitué d'une structure solide et d'une phase gaz disposée essentiellement de manière linéaire dite "en canaux".

Une approche similaire met en oeuvre des structures lamellaires en "mille-feuilles", avec les deux phases disposées en feuillets et un écoulement du gaz bidimensionnel.

Or, le problème de base des procédés à adsorption en phase solide, auquel chacun des trois arrangements connus propose une solution, consiste à réaliser un bon échange de matière gaz/solide tout en conservant une perte de charge faible.

Ainsi, un lit granulaire assure un bon transfert de matière dans la phase gaz mais au prix d'une perte de charge importante.

Par ailleurs, il est difficile d'améliorer beaucoup la situation car la cause première en est la dimension importante de la phase solide relativement à la phase gaz.

En outre, la solution qui consiste à diminuer la taille des grains trouve vite sa limite par une augmentation excessive de la perte de charge. En fait, la structure convexe, voire sphérique, de la phase solide impose un faible rapport surface sur volume intrinsèquement défavorable à la diffusion dans le solide, et un fort rapport surface sur volume dans la phase gaz, alors qu'en fait, c'est le contraire qui devrait être réalisé.

De son côté, une structure en nid d'abeilles ou en mille-feuilles est essentiellement linéaire et les deux phases sont donc en disposition équivalente. L'écoulement du gaz est bien plus régulier que dans le cas du lit granulaire, ce qui conduit à une faible perte de charge. Toutefois, on constate en pratique que le transport de matière dans la phase gazeuse n'est pas satisfaisant justement à cause de cet écoulement régulier, c'est-à-dire laminaire, à moins d'utiliser des dimensions de canaux de l'ordre de 0.1 ou 0.2 mm, ce qui pose des problèmes de fabrication.

Partant de là, le problème qui se pose alors est de pouvoir disposer d'un procédé de séparation ou purification de gaz utilisant un adsorbant possédant un échange de matière optimisé entre la phase gaz et la phase solide, tout en maintenant les pertes de charge à un faible niveau lors d'une utilisation de cet adsorbant pour séparer ou purifier un gaz ou un mélange gazeux, en particulier un procédé PSA ou VSA pour produire, par exemple, de l'oxygène ou de l'hydrogène, ou un procédé TSA utilisé, par exemple, pour retirer le gaz carbonique, des oxydes azotés et/ou des hydrocarbures, ou l'eau de gaz, tels que l'air ou des mélanges $H_2$/CO.

Le but de la présente invention est alors de tenter de résoudre ce problème en proposant un procédé utilisant un adsorbant amélioré utilisable pour purifier ou séparer des gaz, tel l'air.

La solution de l'invention est alors un procédé de purification ou de séparation d'un gaz ou mélange gazeux utilisant un adsorbant monolithique pour la séparation ou la purification de gaz ou mélanges gazeux ayant une structure alvéolaire à porosité ouverte se présentant sous la forme d'une mousse solide perméable aux molécules de gaz.

Selon l'invention, la mousse solide présente une densité supérieure ou égale à 500 kg/m$^3$ et une porosité ouverte comprise entre 20 et 60%.

On parle de porosité ouverte, lorsqu'il existe une forte inter-connectivité entre les alvéoles ou bulles dudit monolithe, c'est-à-dire qu'il est possible d'aller d'un point à un autre de la porosité en passant uniquement par la phase gazeuse sans avoir à traverser la phase solide. Autrement dit, la porosité ouverte de la mousse est définie comme le rapport entre le vide occupé par les bulles et les canaux correspondant à la zone de convection du gaz à séparer, sur le volume total de la mousse. En particulier, cette porosité ouverte exclut la porosité des brins de la mousse. La porosité ouverte peut être par exemple obtenue en immergeant la mousse dans un milieu non-pénétrant pour la phase solide, par exemple une poudre atomisée de granulométrie supérieure à 0,1 mm, et en mesurant le volume de poudre nécessaire à remplir les bulles accessibles de la mousse et en rapportant ce volume au volume total de la mousse.

La densité apparente est, par ailleurs, le rapport de la masse du monolithe au volume global qu'il occupe. La densité apparente est calculée en pesant le monolithe et en rapportant cette masse à son volume calculé à partir des dimensions extérieures du monolithe, qu'il soit parallélépipédique, cylindrique, annulaire, ou de toute autre forme géométrique générale.

Selon le cas, le procédé de l'invention peut comprendre l'une ou plusieurs des caractéristiques techniques suivantes :

- la phase gazeuse de l'adsorbant possède une structure essentiellement convexe et la phase solide une structure essentiellement concave.
- la taille des pores de la phase gazeuse de l'adsorbant est comprise entre 0.1 et 10 mm, de préférence entre 0.2 et 1.5 mm.
- la porosité ouverte de l'adsorbant est comprise entre 20 et 60 % du volume du monolithe, de préférence entre 30 et 50%.
- la densité de l'adsorbent est comprise entre 500 kg/m³ et 900 kg/m³, de préférence supérieure ou égale à 600 kg/m³ et/ou inférieure ou égale à 750 kg/m³.
- l'adsorbant est constitué d'une phase solide comprenant au moins 40% en poids d'au moins un matériau adsorbant comprenant de la zéolithe, du gel de silice, de l'alumine activée ou de charbon actif, et le reste étant constitué d'au moins un matériau de renfort mécanique et/ou à propriétés thermiques particulières.
- la phase solide de l'adsorbant comprend au moins 60% en poids d'au moins un matériau adsorbant.
- le matériau de renfort mécanique et/ou à propriétés thermiques particulières de l'adsorbant est choisi parmi un oxyde inorganique, une céramique, un métal, du carbone ou un polymère.
- l'adsorbant contient des cations métalliques dans sa phase zéolitique.
- l'adsorbant contient des cations métalliques choisis parmi les alcalins et alcalino-terreux, les métaux de transition, les lanthanides, de préférence du lithium, du calcium, du sodium, du potassium.
- le gaz est de l'air.
- le gaz est un mélange contenant $H_2$ et CO, voire d'autres composés.
- on produit au moins un des gaz choisis parmi l'oxygène, l'hydrogène, le $CH_4$, le CO, le $CO_2$ ou l'azote.
- on élimine au moins une impureté du groupe formé par $H_2O$, $CO_2$, $N_xO_y$, et les hydrocarbures insaturés ou saturés.
- il est choisi parmi les procédés VSA, PSA ou TSA, qu'ils soient exploités au sol ou embarqués à bord des avions selon la technologie de type OBOGS (On-Board Oxygen Generating System = Système embarqué de génération d'oxygène) ou à bord d'un véhicule terrestre ou marin, le système de production d'oxygène étant destiné à fournir un flux gazeux enrichi en $O_2$ à un ou des passagers et/ou à un ou plusieurs dispositifs installés à bord du véhicule, ces dispositifs participant éventuellement à la traction du véhicule, par exemple un moteur à combustion ou une pile à combustible (fuel cell), et/ou à son alimentation électrique, par exemple une pile à combustible (fuel cell).
- le flux à purifier est de l'air et au moins une partie de l'air débarrassé d'au moins une partie desdites impuretés est soumis à au moins une étape de distillation cryogénique.
- le flux gazeux est à une température comprise entre -40°C et + 80°C, de préférence comprise entre -10°C et +60°C, de préférence encore comprise entre 10°C et +50°C.
- la pression d'adsorption est comprise entre 1 bar et 60 bars, de préférence entre 3 bars et 35 bars, préférentiellement encore entre 6 bars et 30 bars.
- la pression de désorption est comprise entre 0.2 bar et 60 bar, de préférence entre 0.25 bars et 6 bars
- le débit du flux gazeux est compris entre 0.1 et $10^6$ Nm³/h, de préférence $10^3$ et $5.10^5$Nm³/h.
- la température de régénération est comprise entre -20°C et 400°C, de préférence entre 20°C et 250°C, préférentiellement entre 20°C et 80°C.
- le gaz de régénération de l'adsorbant est de l'azote ou un mélange d'azote et d'oxygène contenant une faible proportion d'oxygène (quelques % en vol.), de préférence le mélange azote/oxygène utilisé pour régénérer l'adsorbant est un gaz résiduaire ou un gaz déchet issu d'une unité de séparation cryogénique de l'air.
- le gaz de régénération est de l'oxygène contenant quelques % d'azote, de préférence le mélange azote/oxygène utilisé pour régénérer l'adsorbant est un gaz issu d'un adsorbeur capable de séparer l'oxygène de l'air
- le gaz de régénération est de l'hydrogène contenant moins de 10 ppm d'impuretés, de préférence, le gaz utilisé pour régénérer l'adsorbant est un gaz issu d'un adsorbeur capable de séparer l'hydrogène d'un mélange en contenant.
- le procédé de l'invention est mis en oeuvre dans au moins un adsorbeur, de préférence dans au moins deux adsorbeurs fonctionnant de manière alternée.

L'invention est représentée sur les figures 1 à 3 ci-annexées où l'on voit qu'il se présente sous forme d'une structure en mousse perméable d'adsorbant solide, c'est-à-dire une structure alvéolaire à porosité ouverte.

Une telle structure tridimensionnelle peut être représentée comme un lit granulaire à phases inversées, c'est-à-dire où les phases solide et gazeuse seraient échangées.

On nomme convexe un volume tel que la courbure de la surface soit dirigée essentiellement vers l'intérieur du volume, concave dans le cas où la courbure est dirigée vers l'extérieur.

La phase gaz est convexe et assez compliquée pour qu'il s'établisse une certaine turbulence qui va conduire à un bon transfert de matière et de chaleur et, cependant, assez dégagée pour que la perte de charge soit faible.

La phase solide est concave, donc avec un bon rapport surface sur volume qui conduit à un transfert de matière élevé.

L'invention conduit par ailleurs à un adsorbant monolithique qui n'est pas sujet à la mise en mouvement et qui, par conséquent, peut supporter des vitesses de passage de gaz élevées, c'est-à-dire d'au moins 1 m/s réel.

La taille des 'bulles' de la mousse peut être adaptée aux contraintes du procédé particulier, en général les bulles ont un diamètre compris entre 0.1 et 10 mm.

La porosité du milieu peut aussi être adaptée, elle est en général comprise entre 10 et 60 %.

La phase solide adsorbante est constituée d'un adsorbant spécifique tel que une zéolite, un charbon actif, une alumine activée ou un gel de silice activé.

La présence d'un liant peut être nécessaire pour assurer la rigidité, par exemple un liant du type alumine, argile, silice. Le liant peut avoir été converti au moins en partie en phase adsorbante, par exemple dans le cas d'une zéolite agglomérée dont le liant argileux a été converti en zéolite identique ou différente de la phase principale.

Il est aussi possible d'utiliser une structure mixte constituée d'une structure rigide recouverte par une phase active particulière, différente de la phase sous-jacente, dans le but par exemple de séparer les fonctions de soutien mécanique et d'adsorption. La structure rigide peut être constituée d'un oxyde du genre silice, alumine, céramique, d'un métal ou d'un polymère. La phase active doit représenter de préférence au moins 70% en poids de la structure complète du monolithe.

Des structures plus complexes peuvent aussi être utilisées, par exemple une mousse métallique sur laquelle est déposée une phase adsorbante. Dans ce cas, la structure métallique assure une fonction double de renfort mécanique et de conduction de la chaleur. Le métal de la structure peut être du cuivre, de l'aluminium, du fer, de l'acier, un alliage choisi en fonction de la conductibilité thermique, de la résistance mécanique, de la densité, de la porosité et de la compatibilité avec la phase adsorbante choisis.

La phase métallique peut être recouverte d'une phase céramique ou oxyde adhérente, dans le but de faciliter et/ou renforcer le dépôt de phase adsorbante.

L'adsorbant de l'invention peut être fabriqué par les techniques connues déjà utilisées pour préparer des mousses métalliques ou en céramique. A ce titre, on peut se référer par exemple aux documents suivants : *Monolithic catalyst supports with foam structure*, A.N. Leonov et al, React. Kinet. Catal. Lett., vol. 60, n° 2, p. 259-267, 1997 ou *Processing of Porous Ceramics*, J. Saggio-Woyansky et al., American Ceramic Society Bulletin, vol. 71, n° 11, p. 1674-1682, 1992.

Le principe de base consiste à préparer une mousse organique telle que de polyuréthane sur laquelle la première phase, active ou de soutien, est déposée, puis à éliminer cette phase organique par thermolyse.

L'adsorbant peut aussi être fabriqué en utilisant la technique des gels, ou des aérogels.

Le principe de base consiste à réaliser la gélification d'une phase liquide, puis, éventuellement après rinçage, à éliminer le solvant.

Les paramètres structurels, tels taille des bulles, porosité, ou forme du monolithe, peuvent être ajustés au niveau de la formation de la mousse et/ou du dépôt de phase de support ou de phase active.

A titre d'exemple, l'adsorbant montré sur les figures 1 à 3 est composé d'alumine.

En pratique, tous les systèmes à adsorption utilisant un lit granulaire ou une structure nids d'abeilles ou mille-feuilles peuvent avantageusement être remplacés par une mise en oeuvre particulière de l'invention qui présente l'avantage d'être facile à mettre en oeuvre par rapport aux structures en nids d'abeilles ou en mille-feuilles, lesquelles nécessitent la réalisation de structures tridimensionnelles très régulières et de très petite dimension.

L'adsorbant monolithique peut être constitué d'un seul bloc ou de l'empilement de plusieurs blocs. Dans ce dernier cas, il est possible d'utiliser des blocs ayant entre eux des propriétés différentes . Par exemple, on peut empiler des monolithes caractérisés par des porosités, des tailles de bulles, des densités de pores ou des compositions chimiques ( taux de liant, nature de la zéolite, nature et proportions des cations, support mécanique) différents, ceci afin d'optimiser chaque tranche d'adsorbeur en fonction du flux qui le traverse. On peut également faire varier la forme, l'épaisseur ou le diamètre moyen des blocs.

Il est aussi possible de réaliser un gradient de propriétés dans un seul bloc, comme par exemple un gradient de taux d'échange ou de porosité.

La nature monolithique des ces formes d'adsorbant doit être prise en compte pour leur manipulation. En effet, de tels adsorbants mis en forme sont rigides et une éraflure, une fracture ou la perte d'une partie de la masse ne peut pas être spontanément compensée par un réarrangement géométrique. Ceci peut avoir des conséquences importantes car alors des passages préférentiels ou des volumes morts pour le gaz sont formés et dégradent beaucoup les performances de l'unité d'adsorption.

Par ailleurs, les adsorbants monolithiques doivent être mis en place dans les adsorbeurs et fixés dans ceux-ci de manière à supprimer toute mise en mouvement globale et tout passage de gaz en dehors du monolithe, ce qui augmente les risques de détérioration cités plus haut.

Un autre problème concerne la mise en oeuvre de l'opération d'échange d'ion à laquelle peuvent être soumis les monolithes. L'échange d'ion consiste à mettre l'adsorbant zéolithique en contact avec une solution d'un sel à échanger, par exemple un sel de lithium pour la fabrication d'une faujasite au lithium. L'échange d'ions est, dans ce cas, difficile et doit être conduit avec l'adsorbant placé en colonne. Avec un adsorbant granulaire, il n'y a pas de problème majeur à remplir la colonne, puis à la vidanger après échange. Par contre, dans le cas d'un monolithe, on conçoit la difficulté d'introduire et de retirer le produit de la colonne sans l'abîmer, ou le problème des passages préférentiels entre le monolithe et la paroi de la colonne. L'activation du monolithe est aussi un problème avec la manipulation, et le passage du gaz au travers du monolithe.

On voit donc que le traitement, le transport, le stockage et la mise en place de ces monolithes sont difficiles, et cela d'autant plus que ces monolithes sont de taille importante et de structure complexe. Une possibilité de tourner cette difficulté consiste à augmenter le taux de liant, mais alors on perd en capacité.

L'invention propose aussi une solution au problème de la fragilité des monolithes, en permettant une manipulation et un transport, un stockage et une mise en place aisés, quelle que soit la résistance intrinsèque du matériau qui les constituent. Elle permet aussi d'augmenter la capacité intrinsèque du matériau adsorbant.

L'invention propose d'entourer le monolithe d'une carène rigide capable de résister aux chocs et contraintes mécaniques et aussi capable d'être introduite telle quelle dans les colonnes d'adsorption. Le monolithe peut alors être manipulé et transporté sans problème, l'ajustement dans la colonne d'adsorption peut être réalisé au moyen de joints et de cales. Eventuellement, la carène peut servir de colonne d'adsorption.

En fait, le carénage du monolithe permet d'utiliser des combinaisons de liant et de matière active trop faibles pour supporter à elle seuls leur propre poids, et donc il conduit à des matériaux ayant une plus forte proportion de matière active. Par exemple, des adsorbants ayant moins de 10% en poids de liant peuvent être réalisés. Ceci permet aussi de réaliser des monolithes de structure très fine, par exemple des canaux de l'ordre de 0.1 ou 0.2 mm avec des parois de 0.05 à 0.5 mm, qui ne possèdent pas la solidité mécanique leur permettent de former des structures de grande dimension.

Pour séparer les gaz ou les purifier suivant la technique dite PSA ou TSA, la carène doit pouvoir supporter les variations de températures sans que le contact avec le monolithe soit dégradé.

On peut procéder par exemple en introduisant le mélange "vert" de liant et d'adsorbant mis en forme dans une virole métallique ou céramique, puis cuire l'ensemble pour durcir le liant et activer l'adsorbant. Pendant cette opération, on peut faire passer un gaz de balayage au travers des passages de l'adsorbant, ce qui permet d'éliminer l'eau et les gaz dégagés de manière efficace. On peut aussi ajouter un agent gonflant qui va ajuster le monolithe contre la paroi interne de la virole, avec pour conséquence une adhérence solide, encore améliorée au besoin par traitement de surface du métal. On peut aussi mettre le mélange liant et adsorbant en vrac et réaliser le gonflage in-situ, par exemple dans le cas d'une mousse. Bien sûr, on peut opérer suivant un protocole mixte tel que remplissage de la virole d'un mélange de mousse durci non monolithique et de précurseur de mousse, puis réaliser le moussage final.

Le chauffage peut être réalisé par le gaz de balayage du solide, ou bien par chauffage extérieur par conduction ou micro-ondes, ou bien par une combinaison.

Une autre méthode consiste à cuire le monolithe à part, puis à l'introduire dans la virole, l'ajustement se faisant par l'usage de colle (prise à froid ou à chaud) à l'inter paroi. Une variante consiste à utiliser une virole constituée d'un matériau à mémoire de forme qui va se rétracter en ajustant le monolithe.

Encore, une autre méthode encore consiste à enrouler une feuille de matériau souple autour du monolithe, la cuisson et l'activation se faisant avant ou après. Dans tous les cas, il peut être utile d'utiliser une colle qui va rendre solidaires l'adsorbant et la carène, la colle peut être organique ou minérale (silicate).

Il est possible d'utiliser la carène directement comme colonne d'adsorption ou bien de la disposer à l'intérieur d'une virole à propriétés mécaniques renforcées. Dans ce dernier cas, plusieurs monolithes peuvent être disposées en série. L'ajustement de la virole à la colonne peut se faire par tous moyens connus de l'homme de l'art : joints toriques ou plats, cales, guides, rails ...

Dans le cas où l'on veut réaliser un adsorbeur à flux radial, on réalise une carène constituée de deux cylindres coaxiaux, d'un matériau perméable tel que grille, caillebotis, fritté. Ce cas est particulièrement indiqué pour les mousses perméables.

De manière générale, l'adsorbant caréné comporte des surfaces qui doivent être étanches aux gaz et aux liquides, chargées de canaliser l'écoulement, et des surfaces perméables aux gaz et aux liquides par où entre et sort le gaz ou le liquide. La partie imperméable aux gaz et aux liquides peut être constituée de tout matériau rigide imperméable tel que métal, céramique, plastic. La partie perméable aux gaz et aux liquides peut être constituée de tous matériau perméable métallique, minéral ou organique réalisé de manière à assurer le passage du gaz, tel que perforations, tissage, emboutissage... La partie perméable aux gaz et aux liquides peut aussi ne pas contenir de carénage.

Un autre avantage d'un adsorbant caréné est de permettre un traitement facile de l'adsorbant, par exemple pour réaliser un échange d'ions, ou une activation. Le carénage permet de faire percoler la solution d'échange ou le gaz d'activation directement au travers du monolithe, en limitant le problème à assurer l'étanchéité à l'entrée et la sortie. Dans le cas d'un échange en colonnes, la carène peut servir à canaliser la solution d'échange, voire à servir de support complet. Il suffit alors dans ce cas d'assurer la circulation de la solution d'échange par un système de vannes et de canalisations. Dans le mode opératoire préféré, la colonne est placée telle quelle dans le circuit de solution, puis est retirés après échange d'ions.

De la même manière, l'adsorbant peut être activé après échange d'ions par passage de gaz chaud, éventuellement séché et décarbonaté au travers de la mousse, la carène servant au moins à canalise le gaz d'activation, voire à assurer la fonction complète de soutien de la structure. Bien sûr, toutes les manières de conduire l'activation ou l'échange d'ions ou toute mise en contact du matériau adsorbant avec un fluide en colonne peuvent être importée des méthodes de traitement des lits granulaires.

Exemple

Considérons un cycle VPSA (Vacuum Pressure Swing Adsorption = adsorption à pression et vide modulés) à deux adsorbeurs, mis en oeuvre par un dispositif embarqué de type OBOGS.

La pression haute est de 3,06 bar absolu, la pression basse (vide) est de 480 mbar absolu, le cycle est de 2 x 4,4 s.

Il se décompose en 4 étapes principales :

- alimentation/production,
- alimentation et une partie de la production sert à éluer la deuxième bouteille à contre-courant,
- purge à contre courant,
- élution à contre-courant par la deuxième bouteille qui se trouve en production.

La deuxième bouteille subit le même cycle, déphasé d'une demi temps de cycle.

Ce cycle permet de produire de l'oxygène de pureté égale à environ 81,5% à partir d'air ambiant à 25°C et sec. Une étape préliminaire peut être effectuée pour sécher l'air, par exemple par passage sur un lit d'alumine.

La productivité est exprimée comme la quantité d'oxygène équivalent pur produite par unité de volume d'adsorbant.

On remplit les adsorbeurs de galettes de mousses de zéolithe LiLSX superposées, chacune étant composée à 86% en poids de zéolithe et à 14% de liant inorganique et ayant une porosité ouverte de 45%. La masse volumique d'une telle mousse est d'environ 560 kg/m$^3$. Les dimensions moyennes de la mousse sont de 0,400 mm pour les brins et de 0,360 mm pour les pores de la phase gaz.

On empile ainsi les mousses sur une hauteur de 32 cm.

Les performances d'une telle unité de production sont obtenues par simulation à l'aide d'un logiciel de procédé d'adsorption prenant en compte les transferts de masse par le modèle de la Linear Driving Force (LDF) et les pertes de charge par la relation d'Ergun appliquée aux mousses; voir les travaux sur les mousses catalytiques de Twigg M. V. and Richardson J.T., 2002, Trans IChemE, 80, Part A, pp 183-189 : Theory and applications of ceramic foam catalysts et Richardson J.T., Peng Y. and Remue D., 2000, Applied Catalysis A General 204, pp 19-32 : Properties of ceramic foam catalyst supports : pressure drop.

La cinétique LDF est pilotée par un coefficient ak que l'on peut calculer pour des géométries simples d'adsorbant comme les sphères, les cylindres et les plans. Pour les mousses, ce coefficient est calculé en assimilant les brins de la mousse à des cylindres.

$$ak = \frac{8 \times \varepsilon \times D_p}{R^2}$$

avec : $D_P$ : diffusivité effective tenant compte de la tortuosité $\tau$ et de la pression P :

$$D_p = D_m / \tau / P$$

où $D_m$ est la diffusivité moléculaire.

avec $D_m$ = 0.2 cm$^2$/sec, $\tau$ = 4, P = 3 bars, $\varepsilon$ = 0.35 et R = 0.02 cm.

On obtient alors une valeur de ak égale à environ 120 s$^{-1}$.

Le réglage de la pureté de l'oxygène produit par une telle unité se fait en ajustant le débit d'air entrant jusqu'à obtenir une pureté donnée après stabilisation du cycle.

La productivité simulée dans ce cas est prise comme référence 100.

Prenant le même système, on augmente la porosité de brins de manière à avoir une densité de mousse de 450 kg/m$^3$ seulement, c'est-à-dire que, typiquement, on passe d'une porosité de brin de 35% à 48%, tout en maintenant la porosité ouverte à 45%.

La cinétique est alors améliorée puisque le coefficient ak vaut alors 160 s$^{-1}$.

A l'inverse, dans ces conditions, la productivité chute à 84, du fait de la diminution de la quantité volumique de matière active.

Reprenant le système initial avec la porosité de brin initiale, on augmente cette fois la porosité ouverte à 60%, ce qui se répercute sur la densité de la mousse qui chute à 400 kg/m$^3$.

La taille des brins est maintenue à 0,400 mm de manière à maintenir la cinétique (ak = 120 s$^{-1}$), et la taille des pores est alors de 0,490 mm.

La productivité chute alors à 69, du fait de la diminution de la quantité volumique de matière active.

Si maintenant la porosité ouverte descend à 30%, la densité est de 711 kg/m$^3$, la taille des brins est maintenue à 0,400 mm et les pores font 0,260 mm de diamètre.

La productivité augmente et vaut 126, en raison de la densité plus importante de la mousse, donc d'une plus grande masse de matière active par unité de volume.

| | Densité de la mousse | Porosité ouverte | Cinétique (ak) | Productivité |
|---|---|---|---|---|
| Référence | 560 kg/m$^3$ | 45% | 120 s$^{-1}$ | 100 |
| Cas 1 | 450 kg/m$^3$ | 45% | 160 s$^{-1}$ | 84 |
| Cas 2 | 400 kg/m$^3$ | 60% | 120 s$^{-1}$ | 69 |
| Cas 3 | 711 kg/m$^3$ | 30% | 120 s$^{-1}$ | 126 |

Les simulations du tableau précédent montrent l'importance d'utiliser des mousses denses selon l'invention pour séparer l'oxygène de l'air et, en particulier, l'effet très néfaste d'une porosité ouverte supérieure à 60%.

Elles montrent aussi l'importance de maintenir une densité supérieure à 500 kg/m$^3$.

En outre, on a constaté qu'il est difficile techniquement de fabriquer une mousse ayant une porosité inférieure à 20% puisque le seuil de percolation est supérieur à 20%. Ainsi, une mousse ayant moins de 20% de porosité est en grande partie à porosité fermée, donc inintéressante pour la séparation de l'air.

Par la limite inférieure de la porosité, on atteint également la limite supérieure en termes de densité.

Dans le cas d'une mousse faite de zéolithe et de liant céramique, comme dans les simulations, cette limite supérieure est de l'ordre de 750 kg/m$^3$. Cependant, la densité dépend du matériau et dans le cas d'une mousse supportée sur un squelette métallique par exemple, elle peut doubler ou tripler.

De façon plus générale, le procédé de purification ou de séparation de l'invention est particulièrement adapté à la production d'oxygène sur des unités de type OBOGS ou dans des appareils médicaux de production d'oxygène, en particulier dans des concentrateurs d'oxygène médicaux.

De ce fait, l'invention concerne aussi un système embarqué sur un aéronef (avion, hélicoptère...) de génération d'oxygène (OBOGS) à partir d'air mettant en oeuvre un procédé selon l'invention de manière à produire de l'oxygène ayant une pureté comprise entre 50 et 96% en volume, de préférence entre 60 et 93%. Dans cette application OBOGS, la production d'oxygène se fait en mode VSA, PSA ou une combinaison des deux (VPSA). La pression haute est classiquement comprise entre environ 1 et 3 bars absolus, et la pression basse entre 0.1 et 0.5 bars absolus. Le temps de cycle est compris entre 2 x 2 sec et 2 x 5 sec.

De manière alternative, l'invention porte également sur un concentrateur d'oxygène médical comprenant au moins un adsorbeur, de préférence 2 ou 3 adsorbeurs, fonctionnant selon un mode VSA, PSA ou VPSA de manière à produire un flux de gaz riche en oxygène et contenant au moins 25% d'oxygène en volume en mettant en oeuvre un procédé selon l'invention.

**Revendications**

1. Procédé de purification ou de séparation d'un gaz ou mélange gazeux utilisant un adsorbant monolithique pour la séparation ou la purification de gaz ou mélanges gazeux ayant une structure alvéolaire à porosité ouverte se présentant sous la forme d'une mousse solide perméable aux molécules de gaz,
   **caractérisée en ce que** ladite mousse solide présente une densité supérieure ou égale à 500 kg/m$^3$ et une porosité ouverte comprise entre 20 et 60%.

2. Procédé selon la revendication 1, **caractérisé en ce que** la porosité ouverte est comprise entre 30 et 50%.

**3.** Procédé selon la revendication 1, **caractérisé en ce que** la taille des pores de la phase gazeuse de l'adsorbant est comprise entre 0.1 et 10 mm, de préférence entre 0.2 et 1.5 mm.

**4.** Procédé selon la revendication 1, **caractérisé en ce que** la densité de l'adsorbant est comprise entre 500 kg/m$^3$ et 900 kg/m$^3$.

**5.** Procédé selon l'une des revendications 1 ou 2, **caractérisé en ce que** la porosité de l'adsorbant est comprise entre 10 et 60 % du volume du monolithe, de préférence entre 30 et 50%.

**6.** Procédé selon l'une des revendications 1 à 3, **caractérisé en ce que** l'adsorbant est constitué d'une phase solide comprenant au moins 40% en poids d'au moins un matériau adsorbant comprenant de la zéolithe, du gel de silice, de l'alumine activée ou de charbon actif, et le reste étant constitué d'au moins un matériau de renfort mécanique et/ou à propriétés thermiques particulières.

**7.** Procédé selon l'une des revendications 1 à 4, **caractérisé en ce que** la phase solide de l'adsorbant comprend au moins 60% en poids d'au moins un matériau adsorbant, de préférence la mousse solide comprend au moins 70% en poids de matière adsorbante.

**8.** Procédé selon l'une des revendications 1 à 7, **caractérisé en ce que** le matériau de renfort mécanique et/ou à propriétés thermiques particulières de l'adsorbant est choisi parmi un oxyde inorganique, une céramique, un métal, du carbone ou un polymère.

**9.** Procédé selon l'une des revendications 1 à 8, **caractérisé en ce que** l'adsorbant contient des cations métalliques dans sa phase zéolitique choisis parmi les alcalins et alcalino-terreux, les métaux de transition, les lanthanides.

**10.** Procédé selon l'une des revendications 1 à 9, **caractérisé en ce que** l'adsorbant contient des cations métalliques choisis parmi le lithium, le calcium, le sodium et le potassium, de préférence du lithium.

**11.** Procédé selon l'une des revendications 1 à 10, **caractérisé en ce que** le gaz est de l'air ou un mélange contenant $H_2$ et CO, de préférence de l'air.

**12.** Procédé selon l'une des revendications 1 à 10, **caractérisé en ce qu'**on produit au moins un des gaz choisis parmi l'oxygène, l'hydrogène, le $CH_4$, le CO, le $CO_2$ ou l'azote, de préférence de l'oxygène.

**13.** Procédé selon l'une des revendications 1 à 12, **caractérisé en ce qu'**on élimine au moins une impureté du groupe formé par $H_2O$, $CO_2$, $N_xO_y$, et les hydrocarbures insaturés ou saturés.

**14.** Procédé selon l'une des revendications 1 à 13, **caractérisé en ce qu'**il est choisi parmi les procédés VSA, PSA ou TSA, de préférence un procédé VSA, PSA ou VPSA.

**15.** Système embarqué à bord d'un véhicule de génération d'oxygène (OBOGS) à partir d'air mettant en oeuvre un procédé selon l'une des revendications 1 à 14 de manière à produire de l'oxygène ayant une pureté comprise entre 50 et 96% en volume, de préférence entre 60 et 93%.

**16.** Système embarqué selon la revendication 15, **caractérisé en ce qu'**il est agencer de manière à alimenter en gaz riche en oxygène, au moins un dispositif installé à bord du véhicule et participant à la traction du véhicule et/ou à son alimentation électrique, en particulier une pile à combustible.

**17.** Concentrateur d'oxygène médical comprenant au moins un adsorbeur, de préférence 2 ou 3 adsorbeurs, fonctionnant selon un mode VSA, PSA ou VPSA de manière à produire un flux de gaz riche en oxygène et contenant au moins 25% d'oxygène en volume en mettant en oeuvre un procédé selon l'une des revendications 1 à 14.